# EUROPEAN PATENT APPLICATION

(11) **EP 4 657 748 A1**
(43) Date of publication of application: **03.12.2025**
(21) Application number: 25174393.6
(22) Date of filing: 06.05.2025
(51) Int. Cl.: H02P 25/22, H02P 27/08

(54) **RECONFIGURABLE TWELVE-PHASE GENERATOR**

(30) Priority: 31.05.2024 IN 202411042381; 08.08.2024 US 202418797773
(71) Applicant: Honeywell International Inc., Charlotte, NC 28202 (US)
(72) Inventor: MUBASLAT, Saed M., Charlotte, 28202 (US); NIEWIADOMSKI, Walter, Charlotte, 28202 (US); KODAGAVALLI, Deepak, Charlotte, 28202 (US)
(74) Representative: Ingrassia, Fisher & Lorenz UK Ltd.

(57) **Abstract**

A twelve-phase generator includes a power reconfiguration circuit comprising a set of switches. The twelve-phase generator can change the phase output to another phase, such as a ten-phase output, eight-phase output, six-phase output, five-phase output, and other phase outputs, based on one or more operating parameter, so that the twelve-phase generator effectively operates as a different multi-phase generator. In some embodiments, the phase output adapts as a function of the measured torque of the rotor.

## Description

### CROSS-REFERENCE TO RELATED APPLICATIONS

This application claims the benefit of Indian Provisional Patent Application No. 202411042381 filed on May 31, 2024, and titled "RECONFIGURABLE TWELVE-PHASE GENERATOR", the contents of which are incorporated herein in its entirety.

### BACKGROUND

Aerial vehicles such as commercial aircraft utilize power systems to provide power for aircraft system functionality. Such power systems typically comprise one but potentially more alternating current (AC) generators that generate power.

Generators are complex systems, and exist in many forms. One example is a multi-phase generator, which is configured to generate and deliver power in a designated set of phases. Example multi-phase generators include three-phase, six-phase, and twelve-phase generators. However, multi-phase generators are currently designed as rigid and inflexible systems. Twelve-phase generators in particular generally lack redundancy and fail-safe operation, so that in the event of an intrinsic fault, the generator must cease operation until the fault is cured. Additionally, the internal operation in the generator, such as phase and modulation control, is statically driven, which may not be suitable for either efficient performance of the generator or for desired needs of external systems that receive power from the generator.

### SUMMARY

The details of one or more embodiments are set forth in the description below. The features illustrated or described in connection with one exemplary embodiment may be combined with the features of other embodiments. Thus, any of the various embodiments described herein can be combined to provide further embodiments. Aspects of the embodiments can be modified, if necessary to employ concepts of any patents, applications and publications as identified herein to provide yet further embodiments.

In one embodiment, a twelve-phase generator is disclosed. The twelve-phase generator, comprises at least one processor, wherein the at least one processor is configured to generate pulse modulated signals. The twelve-phase generator comprises a driver, wherein the driver is configured to receive the pulse modulated signals from the at least one processor. The twelve-phase generator comprises a set of switches electrically coupled to the driver, wherein the driver is configured to provide power signals based on the pulse modulated signals that energize the set of switches. The twelve-phase generator comprises a set of winding coils electrically coupled to the set of switches and to a rotor, wherein the rotor is coupled to a stator. The set of winding coils is configured to receive the power signals based on one of a plurality of switching configurations of the set of switches. The set of winding coils is configured to generate a voltage that activates the stator. Each one of the set of winding coils is configured to provide a respective voltage output that causes the rotor to operate in one of twelve phases. The set of switches is configured to switch between each of the plurality of switching configurations. In each of the plurality of switching configurations, the set of winding coils is configured to provide a variable phase output in one of the twelve phases, wherein the variable phase output includes an even or odd number of phases. The at least one processor is configured to control the switching configuration of the set of switches based on at least one operating parameter of the rotor.

In another embodiment, a system is disclosed. The system comprises at least one processor, wherein the at least one processor is configured to generate pulse modulated signals. The system comprises a driver, wherein the driver is configured to receive the pulse modulated signals from the at least one processor. The system comprises a power configuration circuit comprising a set of switches electrically coupled to the driver. The driver is configured to provide power signals based on the pulse modulated signals that energize the set of switches. The system comprises a set of winding coils electrically coupled to the set of switches and to a rotor, wherein the rotor is coupled to a stator. The set of winding coils is configured to receive the power signals based on one of a plurality of switching configurations of the set of switches. The set of winding coils is configured to generate a voltage that activates the stator. Each one of the set of winding coils is configured to provide a respective voltage output that causes the rotor to operate in one of twelve phases. The set of switches is configured to switch between each of the plurality of switching configurations. In each of the plurality of switching configurations the set of winding coils is configured to provide a variable phase output in one of the twelve phases, wherein the variable phase output includes an even or odd number of phases. The at least one processor is configured to control the switching configuration of the set of switches based on at least one operating parameter of the rotor.

In yet another embodiment, a method for operating a reconfigurable generator is disclosed. The reconfigurable generator is configured to provide a variable phase output in a first phase of a plurality of phases to one or more loads. The method comprises setting a power reconfiguration circuit of the reconfigurable generator comprising a set of switches in a first switching configuration. The method comprises determining one or more operating parameters of the reconfigurable generator. The method comprises determining a need to change the variable phase output based on the one or more operating parameters. The method comprises setting the power reconfiguration circuit in a second switching configuration in response to determining the need to change the variable phase output. The method comprises outputting the variable phase output in a second phase of the plurality of phases.

These and other features of the systems and methods of the subject disclosure will become more readily apparent to those skilled in the art from the following detailed description of the preferred embodiments taken in conjunction with the drawings.

### BRIEF DESCRIPTION OF THE DRAWINGS

Understanding that the drawings depict only exemplary embodiments and are not therefore to be considered limiting in scope, the exemplary embodiments will be described with additional specificity and detail through the use of the accompanying drawings, as briefly summarized as follows.
Figure 1 depicts a block diagram of a reconfigurable generator, as described in one or more embodiments.
Figure 2 depicts a circuit diagram of a reconfigurable generator operating as a twelve-phase generator, as described in one or more embodiments.
Figure 3 depicts a circuit diagram of the reconfigurable generator of Figure 2 operating as an eight-phase generator, as described in one or more embodiments.
Figure 4 depicts a circuit diagram of the reconfigurable generator of Figure 2 operating as a six-phase generator, as described in one or more embodiments.
Figure 5 depicts a circuit diagram of the reconfigurable generator of Figure 2 operating as a four-phase generator, as described in one or more embodiments.
Figure 6 depicts a circuit diagram of the reconfigurable generator of Figure 2 operating as a three-phase generator, as described in one or more embodiments.
Figure 7 depicts a flow diagram of a method for operating a reconfigurable twelve-phase generator, as described in one or more embodiments.

In accordance with common practice, the various described features are not drawn to scale but are drawn to emphasize specific features relevant to the exemplary embodiments.

### DETAILED DESCRIPTION

In the following detailed description, reference is made to the accompanying drawings that form a part hereof, and in which is shown by way of illustration specific illustrative embodiments. However, it is to be understood that other embodiments may be utilized and that logical, mechanical, and electrical changes may be made. Furthermore, any methods presented in the drawing figures and the specification are not to be construed as limiting the order in which the individual steps may be performed. The following detailed description is, therefore, not to be taken in a limiting sense.

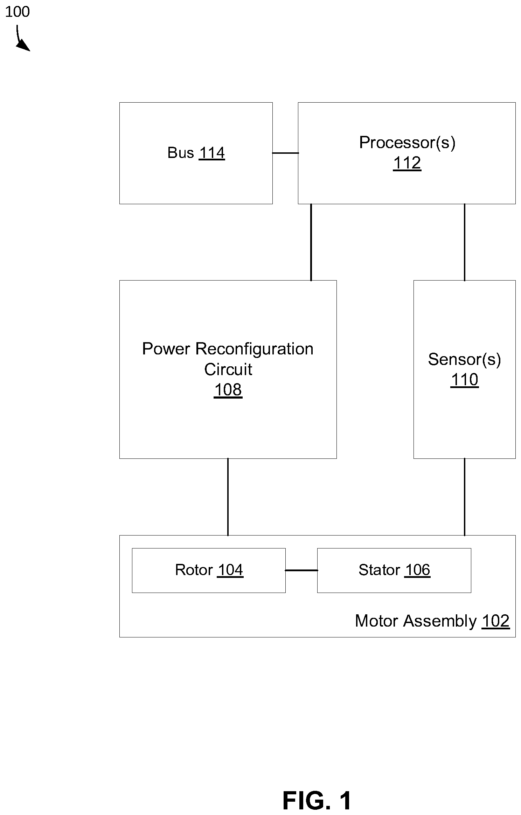

Figure 1 depicts a block diagram of a reconfigurable generator 100. The reconfigurable generator 100 is installed on a vehicle and generally configured to generate and provide power to other system(s) or device(s) on the vehicle. Use of the term "vehicle" is not intended to be limiting and includes all classes of vehicles falling within the ordinary meaning of the term. This would include but not limited to, aerial traversing vehicles, unmanned and/or space traversing vehicles, water traversing vehicles, and land traversing vehicles. Throughout the disclosure, the vehicle may be further illustrated as an aircraft with the understanding that the principles described herein apply to other vehicles where applicable. In the context of aircraft, example systems and devices that can receive power include sensor systems, communication systems, navigation systems, avionics devices (i.e. devices that provide navigation functionality to a pilot or operator and receive input from a pilot or operator), and engines. These systems and devices can be electrically coupled to reconfigurable generator 100 via a communication bus 114.

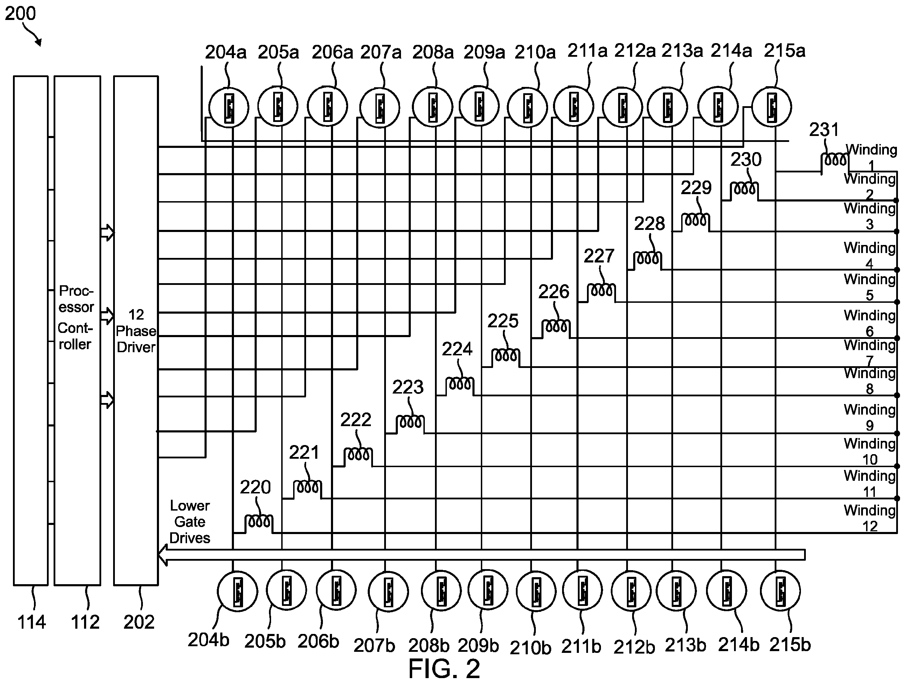

Reconfigurable generator 100 functions optimally as a twelve-phase generator, in which power is ordinarily generated in twelve distinct phases to a load. However, as described in more detail with respect to Figures 2-6, reconfigurable generator 100 can change the phase output of its power to a load. In doing so, reconfigurable generator 100 may operate with different phases, such as an eight-phase generator, six-phase generator, and three-phase generator. Other phases are possible, and may be utilized depending on the operating environment of reconfigurable generator 100. Advantageously, reconfigurable generator 100 can support any even or odd phase output up to twelve-phases, and as operating conditions change, can reconfigure its output to optimize performance during continuous operation.

Reconfigurable generator 100 includes a motor assembly 102 comprising a rotor 104 and a stator 106. Rotor 104 is configured to undergo rotational motion about an axis, which generates a torque dependent on the rotational speed. The mechanical torque is converted to electrical power by a power reconfiguration circuit 108. The power reconfiguration circuit 108 comprises a plurality of switches, as explicitly shown in Figures 2-6, and is configured to control the operation of the rotor 104. Since reconfigurable generator 100 operates as a twelve-phase generator, two sets of twelve switches are present in power reconfiguration circuit 108, for a total of twenty four switches. Each of the switches in power reconfiguration circuit 108 are configured to be switched independently from one another. In some embodiments, power reconfiguration circuit 108 comprises metal-oxide-semiconductor field-effect transistor (MOSFET) switches.

As the rotor 104 undergoes rotational motion it generates torque, which can be converted into power (e.g., alternating current (AC) power) by stator 106. In some embodiments, the stator 106 includes a resolver electrically coupled to rotor 104 and is configured to generate current to stimulate the winding coils of the stator 106. In some embodiments, the resolver includes one or more wires or brushes that engage with the rotor 104 as the rotor 104 undergoes motion. Additionally, or alternatively, the resolver generates signals indicating the position of the rotor 104 without physically contacting with the winding coils using wires or brushes.

One or more sensors 110 can be coupled to the motor assembly 102 to monitor various operating parameters of the rotor 104. For example, sensors 110 can include one or more Hall sensors configured to capture the position and speed of the rotor 104 based on changes in the magnetic field of the rotor. These Hall sensors can be coupled to an amplifier that powers the Hall sensor to monitor the rotor 104. Sensors 110 may comprise other sensors. In some embodiments, current sensors and potentiometers can be used to measure the current and voltage generated by the rotor 104. Still other sensors, such as temperature sensors, can be used to monitor the operating environment of the motor assembly 102. Sensors 110 provide these operating parameters of the motor assembly 102 to processor 112 for further analysis.

Processor 112 acts as the main control and processing entity for the reconfigurable generator 100. Processor 112 is configured to receive operating parameters of the motor assembly 102, such as the position, speed, torque, and current generated by the rotor 104, and controls the operation of the rotor 104 and circuitry present in the power reconfiguration circuit 108. Processor 112 is configured to reconfigure the power reconfiguration circuit 108 based on at least one operating parameter of the generator 100. For example, as the generator 100 initializes and the rotor 104 begins rotating, processor 112 can reconfigure the power reconfiguration circuit 108 to set the reconfigurable generator 100 to output power at a first defined current and in a first phase (e.g., twelve phases). After the rotor 104 reaches a certain torque threshold, processor 112 then reconfigures the power reconfiguration circuit 108 to set the reconfigurable generator 100 to output power at a second defined current and in a second phase (e.g., eight phases). Multiple different operating profiles can be set and utilized as the reconfigurable generator 100 undergoes continuous operation. In doing so, the reconfigurable generator 100 can operate as a twelve-phase generator when it is favorable to do so, but can be reconfigured to output power in different sets of phases (e.g., eight-phases, six-phases, three-phases) when desirable. Additionally, in some embodiments, reconfigurable generator 100 is fault-tolerant, so that when some fault or malfunction affects the operation of the generator 100, it can continue operation instead of shutting down.

The power that is generated from motor assembly 102 is provided to processor 112, for feedback and for deliverance to one or more loads. Processor 112 provides the generated power to any coupled systems or devices via bus 114.

Processor 112 may include any one or combination of processors, microprocessors, digital signal processors, application specific integrated circuits, field programmable gate arrays, and/or other similar variants thereof. Processor 112 may also include, or function with, software programs, firmware, or other computer readable instructions for carrying out various process tasks, calculations, and control functions, used in the methods described below. These instructions are typically tangibly embodied on any storage media (or computer readable media) used for storage of computer readable instructions or data structures.

Figure 2 depicts a circuit diagram of a reconfigurable generator operating as a twelve-phase generator 200. In Figure 2, bus 114 and processor 112 is shown. The power reconfiguration circuit 108 is depicted as a series of switches 204-215, with a first row of switches 204a-215a electrically coupled to a second row of switches 204b-215b. Switches 204-215 are also electrically coupled to the motor assembly 102 by twelve winding coils 220-231.

To drive the current that is supplied by the motor assembly 102, a driver 202 is installed and coupled to each of the switches 204-215 and electrically coupled to stator 106 via each of the switches. For the twelve-phase embodiment in Figure 2, driver 202 applies twenty four distinct energizing signals that respectively apply to each of the switches so that the current flowing through each switch is energized in a periodic manner. For example, driver 202 can send pulse width modulated signals that modulate the energizing signal waveform that is applied to each of the switches 204-215. Such modulation can be achieved using a sinusoidal modulation scheme, trapezoidal modulation scheme, or other periodic waveform. The modulation applied by driver 202 is controlled by processor 112, which sends pulse width modulated signals to driver 202 and ultimately to switches 204-215.

Referring to Figures 1-2, the power delivered by the motor assembly 102 is dependent on the configuration of switches 204-215, which can change as the rotor 104 generates torque. In the configuration shown in Figure 2, the switches 204a-215a provide the flow of current into the subset of selected windings 220-231 while switches 204b-215b provide the flow of the current to the return or ground line of the input power. For example, switch 204a is electrically coupled to allow current to flow to winding coil 220 and into the other windings, while switch 215b is electrically coupled to allow current to flow from other windings to winding 220 and the common return of the main power. In this configuration, each of the winding coils 220-231 are electrically coupled together in a series switching sequence, which allows each winding coil 220-231 to generate power at a respective phase. Accordingly, the output from motor assembly 102 is provided in twelve distinct phases to processor 112, which outputs the twelve-phase voltage to one or more loads coupled to bus 114.

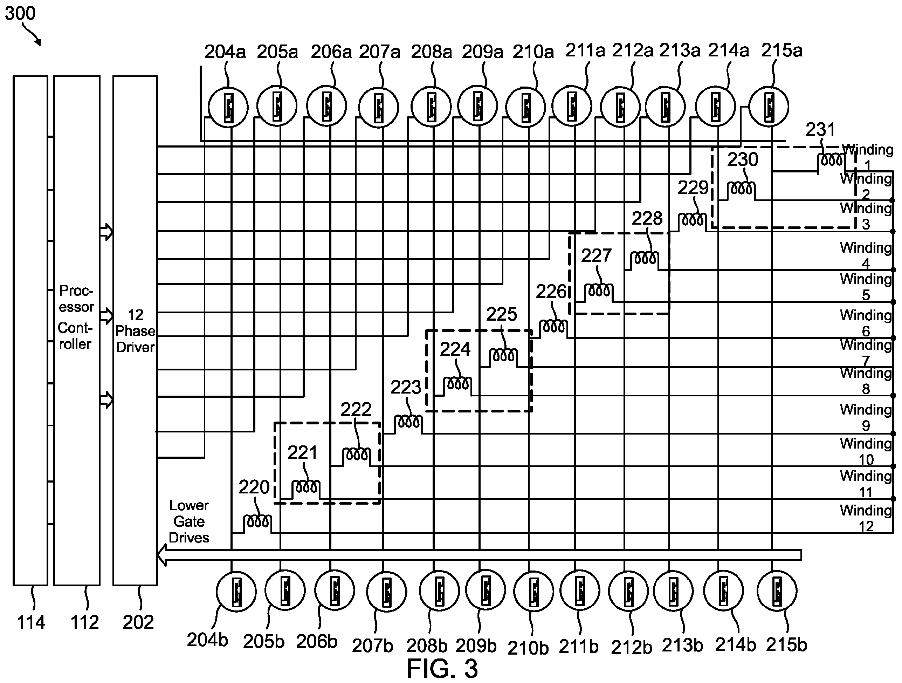

In some embodiments, the switching configuration as shown in Figure 2 is utilized when reconfigurable generator 100 is operating in the early stages of operation. This can occur during initialization and the torque of rotor 104 is below a designated threshold, in which additional phases are useful to compensate for the lower torque in the generator 100. In some embodiments, the configuration shown in Figure 2 is the preferred or default configuration for the reconfigurable generator 100. As operating conditions change, or if the load requirements change, reconfigurable generator 100 can change into one of the other configurations as shown in Figures 3-6.

In some embodiments, the power reconfiguration circuit by virtue of the set of winding coils is configured to generate either AC voltage or direct current (DC) voltage. In these embodiments, the at least one processor 112 can switch the output voltage between an AC voltage and DC voltage based on the at least one operating parameter of the rotor 104.

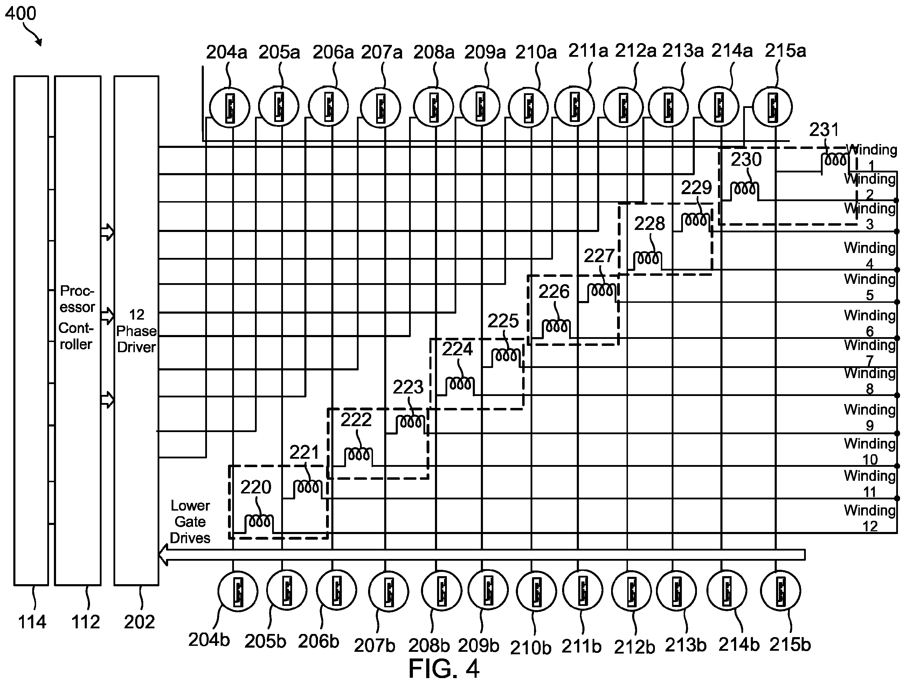

Figure 3 depicts a circuit diagram 300 of the reconfigurable generator of Figure 2 operating as an eight-phase generator. In general, the circuitry depicted in Figure 3 (and the subsequent Figures 4-6) operates similarly as described with respect to Figures 1-2. In the configuration shown in Figure 3, some of the winding coils are electrically coupled in parallel instead of series. Specifically, winding coil 231 and winding coil 230 are coupled in parallel, winding coil 227 and winding coil 228 are coupled in parallel, winding coil 224 and winding coil 225 are coupled in parallel, and winding coil 221 and winding coil 222 are coupled in parallel. The remaining winding coils 220, 223, 226, and 229 are coupled in series to the respective outputs of winding coils 221, 224, 227, and 230, respectively. To generate this mixed parallel-series configuration, one upper switch and one lower switch control the flow of current into and from a single winding, while two simultaneous upper switches and two lower simultaneous switches control the flow of current into and from each paralleled windings. For example, in a single winding configuration for coil 220, switch 204a controls the flow of current into winding 220, while switch 204b controls the flow of current out of winding 220.

As a result of the switching configuration shown in Figure 3, the reconfigurable generator 100 is configured to operate as a twelve-phase generator but outputs a voltage in eight phases. In some embodiments, processor 112 sets the power reconfiguration circuit 108 as shown in Figure 3 when the torque of rotor 104 is above a designated threshold. In some embodiments, this threshold is higher than the threshold to operate in twelve phases. For example, if the torque of the rotor 104 increases from an initialization torque, processor 112 can change the operation of the reconfigurable generator 100 from a twelve-phase generator as shown in Figure 2 to an eight-phase generator as shown in Figure 3. Alternatively, if the torque of rotor 104 falls below the threshold, processor 112 switches the reconfigurable generator 100 from a lower phase state to the eight-phase state as shown in Figure 3.

Figure 4 depicts a circuit diagram 400 of the reconfigurable generator of Figure 2 operating as a six-phase generator. In the configuration shown in Figure 4, six parallel configurations of winding coils are shown, with the parallel configurations coupled together in series. Specifically, winding coil 231 and winding coil 230 are coupled in parallel, winding coil 229 winding coil 228 are coupled in parallel, winding coil 227 and winding coil 226 are coupled in parallel, winding coil 225 and winding coil 224 are coupled in parallel, winding coil 223 and winding coil 222 are coupled in parallel, winding coil 221 and winding coil 220 are coupled in parallel. To generate this mixed parallel-series configuration, pairs of the upper switches are enabled simultaneously for a current input flow through any paralleled windings, and similarly pairs of the lower switches are activated to allow the flow of current out of the parallel windings. For example, the pair of upper switches 204a and 205a are activated simultaneously to allow the flow of current into windings 220 and 221, while switches 204b and 205b will allow the current to flow from other windings and through windings 220 and 221.

As a result of the switching configuration shown in Figure 4, the reconfigurable generator 100 is configured to operate as a twelve-phase generator but outputs a voltage in six phases. In some embodiments, processor 112 sets the power reconfiguration circuit 108 as shown in Figure 4 when the torque of rotor 104 is above a designated threshold. In some embodiments, this threshold is higher than the threshold to operate in twelve phases and eight phases. For example, if the torque of the rotor 104 increases from a start up torque, processor 112 can change the operation of the reconfigurable generator 100 from a twelve-phase generator as shown in Figure 2 to a six-phase generator as shown in Figure 4. Alternatively, if the torque of rotor 104 falls below the threshold, processor 112 switches the reconfigurable generator 100 from a lower phase state to the six-phase state as shown in Figure 4.

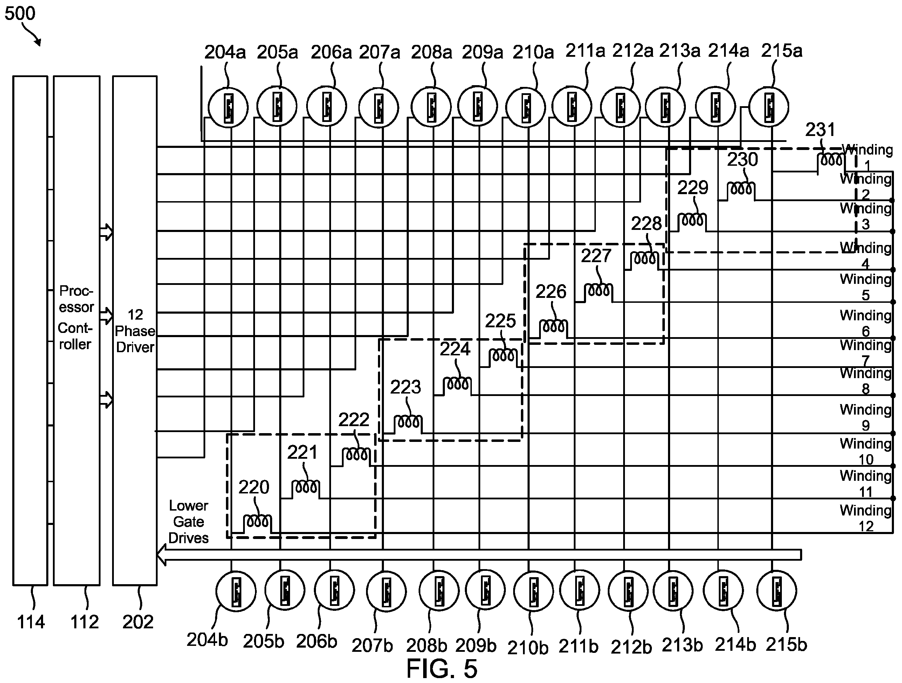

Figure 5 depicts a circuit diagram 500 of the reconfigurable generator of Figure 2 operating as a four-phase generator. In the configuration shown in Figure 5, four parallel configurations of three winding coils are shown, with the parallel configurations coupled together in series. Specifically, winding coil 231, winding coil 230, and winding coil 229 are coupled in parallel; winding coil 228, winding coil 227, and winding coil 226 are coupled in parallel; winding coil 225, winding coil 224, and winding coil 223 are coupled in parallel; winding coil 222, winding coil 221, and winding coil 220 are coupled in parallel. To generate this mixed parallel-series configuration, a set of 3 upper switches is enabled simultaneously for a current input flow through any paralleled windings, and similarly a set of 3 lower switches are activated to allow the flow of current out of the parallel windings. For example, the set of 3 upper switches 204a, 205a, and 206a are activated simultaneously to allow the flow of current into windings 220, 221, and 222, while the set of 3 switches 204b, 205b, and 206b will allow the current to flow from other windings and through windings 220, 221, and 222.

As a result of the switching configuration shown in Figure 5, the reconfigurable generator 100 is configured to operate as a twelve-phase generator but outputs a voltage in four phases. In some embodiments, processor 112 sets the power reconfiguration circuit 108 as shown in Figure 5 when the torque of rotor 104 is above a designated threshold. In some embodiments, this threshold is higher than the threshold to operate in twelve, eight, and six phases. For example, if the torque of the rotor 104 increases from an initialization torque, processor 112 can change the operation of the reconfigurable generator 100 from a twelve-phase generator as shown in Figure 2 to a four-phase generator as shown in Figure 5. Alternatively, if the torque of rotor 104 falls below the threshold, processor 112 switches the reconfigurable generator 100 from a lower phase state to the four-phase state as shown in Figure 5.

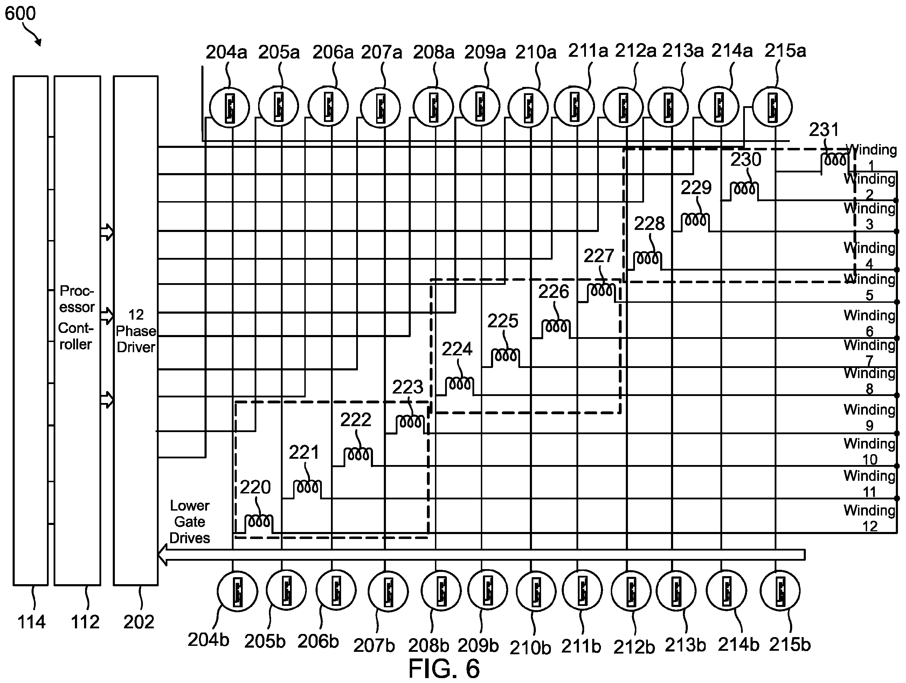

Figure 6 depicts a circuit diagram 600 of the reconfigurable generator of Figure 2 operating as a three-phase generator. In the configuration shown in Figure 6, three parallel configurations of four winding coils are shown, with the parallel configurations coupled together in series. Specifically, winding coil 231, winding coil 230, winding coil 229, and winding coil 228 are coupled in parallel; winding coil 227, winding coil 226, winding coil 225, and winding coil 224 are coupled in parallel; winding coil 223, winding coil 222, winding coil 221, and winding coil 220 are coupled in parallel. To generate this mixed parallel-series configuration, a sets of 4 upper switches are enabled simultaneously for a current input flow through any paralleled windings, and similarly sets of 4 lower switches are activated to allow the flow of current out of the parallel windings. For example, the set of 4 upper switches 204a, 205a, 206a, and 207a are activated simultaneously to allow the flow of current into windings 220, 221, 222, and 223, while the set of 4 switches 204b, 205b, 206b, and 207b will allow the current to flow from other windings and through windings 220, 221, 222, and 223.

As a result of the switching configuration shown in Figure 6, the reconfigurable generator 100 is configured to operate as a twelve-phase generator but outputs a voltage in three phases. In some embodiments, processor 112 sets the power reconfiguration circuit 108 as shown in Figure 6 when the torque of rotor 104 is above a designated threshold. In some embodiments, this threshold is higher than the threshold to operate in twelve, eight, six phases, and four phases. For example, if the torque of the rotor 104 increases from an initialization torque, processor 112 can change the operation of the reconfigurable generator 100 from a twelve-phase generator as shown in Figure 2 to a three-phase generator as shown in Figure 6. Alternatively, if the torque of rotor 104 falls below the threshold, processor 112 switches the reconfigurable generator 100 from a lower phase state to the three-phase state as shown in Figure 6.

Although specific phase configurations are depicted in Figures 2-6, these configurations are not intended to be limiting. Other configurations are possible. For example, reconfigurable generator 100 can be set in an eleven-phase configuration, ten-phase configuration, five-phase configuration, or any other phase configuration less than twelve-phases.

In some embodiments, reconfigurable generator 100 is set into a different phase configuration if a fault is detected. For example, during operation or start-up, a fault may occur in one or more components of the reconfigurable generator 100, such as in the rotor 104, processor 112, or in the switches 204-215. Instead of shutting down, reconfigurable generator 100 is configured to continue operation in a different phase output when such a fault is detected. In one example, if a fault prevents one of the switches 204-215 from outputting a twelve-phase output, processor 112 sets the reconfigurable generator 100 in an eleven-phase state. Processor 112 can also adjust the parameters of pulse width modulation applied to the switches 204-215 by driver 202 in response to changing the phase configuration, such as the amplitude, frequency, and modulation signal applied to driver 202, to compensate for the fault.

Additionally, or alternatively, reconfigurable generator 100 is set into a different phase configuration based on a changing operating parameter. For example, if the torque of the rotor 104 rises above a threshold, reconfigurable generator 100 can change to a lower phase configuration. Alternatively, reconfigurable generator 100 is configured to change to a higher phase configuration if the torque of the rotor 104 falls below a threshold. In some embodiments, a higher number of phases is desirable to generate more torque in the rotor 104. Then, when sufficient torque is generated by the rotor 104, the number of phases can be decreased to preserve or enhance the operating efficiency of the reconfigurable generator 100 for a desired voltage output. In this way, the excitation of the switches 204-215 can be adaptive and dynamic to start with the phases that can create the needed torque at low rotor 104 speeds and then shut down unnecessary phases to reduce switching losses and operate with the needed phases to maintain speed at desired system efficiency.

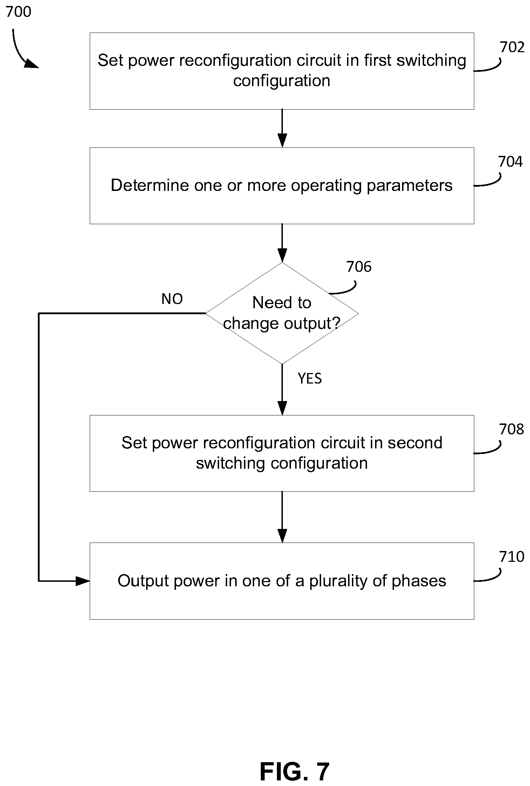

Figure 7 depicts a flow diagram of a method 700 for operating a reconfigurable twelve-phase generator. Method 700 may be implemented via the techniques described with respect to Figures 1-6, but may be implemented via other techniques as well. The blocks of the flow diagram have been arranged in a generally sequential manner for ease of explanation; however, it is to be understood that this arrangement is merely exemplary, and it should be recognized that the processing associated with the methods described herein (and the blocks shown in the Figures) may occur in a different order (for example, where at least some of the processing associated with the blocks is performed in parallel and/or in an event-driven manner).

Method 700 includes setting a power reconfiguration circuit in a first switching configuration at block 702. As shown with respect to Figures 2-6, the power reconfiguration circuit comprises a set of switches that can be energized to provide voltage at different phases to one or more loads connected to the reconfigurable generator. The first switching configuration can be as shown with respect to any of the configurations in Figures 2-6, or can be in other configurations. Method 700 proceeds to block 704 and determines one or more operating parameters. For example, method 700 may monitor the torque exerted by the rotor in relation to its position and speed. Additionally, method 700 may monitor for operation of the components of the reconfigurable generator to see if any faults are present.

At block 706, method 700 determines whether there is a need to change the output of the reconfigurable generator, based on the analysis of the operating parameters determined in block 704. For example, method 700 may determine that there is a fault in one or more of the switches while in the first switching configuration. Also, the operating parameters determined at block 704 may indicate that the generator should be reconfigured. One example is the torque exerted by the rotor. If the torque is above or below a threshold, or outside a defined tolerance range, then this signals a need to change the output of the reconfigurable generator. For example, if the torque is higher than a threshold indicative of an acceptable operating torque, then this signals a need to reduce excessive phases in the current (first) switching configuration.

Method 700 proceeds dependent on the determination of a need to change the output at block 706. If no need is present, then method 700 proceeds directly to block 710 and outputs power in one of a plurality of phases. For example, if the torque exerted by the rotor is suitable then the power reconfiguration circuit can be maintained in the first switching configuration and at the current phase output. However, if such a need is present, then method 700 proceeds to block 708 and sets the power reconfiguration circuit in a second switching configuration different from the first switching configuration. Then at block 710, method 700 outputs power in one of a plurality of phases while in the second switching configuration. Any number of phases between one and twelve can be supported at block 710, and will change based on changing operating parameters and switching configurations. Method 700 can be repeated as the reconfigurable generator undergoes continuous operation.

The methods and techniques described herein may be implemented in digital electronic circuitry, or with a programmable processor (for example, a special-purpose processor or a general-purpose processor such as a computer) firmware, software, or in various combinations of each. Apparatus embodying these techniques may include appropriate input and output devices, a programmable processor, and a storage medium tangibly embodying program instructions for execution by the programmable processor. A process embodying these techniques may be performed by a programmable processor executing a program of instructions to perform desired functions by operating on input data and generating appropriate output. The techniques may advantageously be implemented in one or more programs that are executable on a programmable system including at least one programmable processor coupled to receive data and instructions from, and to transmit data and instruction to, a data storage system, at least one input device, and at least one output device. Generally, a processor will receive instructions and data from a read-only memory and/or a random-access memory. Storage devices suitable for tangibly embodying computer program instructions and data include all forms of non-volatile memory, including by way of example semiconductor memory devices, such as erasable programmable read-only memory (EPROM), electrically erasable programmable read-only memory (EEPROM), and flash memory devices; magnetic disks such as internal hard disks and removable disks; magneto-optical disks; and the like. Any of the foregoing may be supplemented by, or incorporated in, specially-designed application specific integrated circuits (ASICs).

### EXAMPLE EMBODIMENTS

Example 1 includes a twelve-phase generator, comprising: at least one processor, wherein the at least one processor is configured to generate pulse modulated signals; a driver, wherein the driver is configured to receive the pulse modulated signals from the at least one processor; a set of switches electrically coupled to the driver, wherein the driver is configured to provide power signals based on the pulse modulated signals that energize the set of switches; a set of winding coils electrically coupled to the set of switches and to a rotor, wherein the rotor is coupled to a stator, wherein the set of winding coils is configured to: receive the power signals based on one of a plurality of switching configurations of the set of switches, generate a voltage that activates the stator, wherein each one of the set of winding coils is configured to provide a respective voltage output that causes the rotor to operate in one of twelve phases, wherein the set of switches is configured to switch between each of the plurality of switching configurations, wherein in each of the plurality of switching configurations, the set of winding coils is configured to provide a variable phase output in one of the twelve phases, wherein the variable phase output includes an even or odd number of phases, wherein the at least one processor is configured to control the switching configuration of the set of switches based on at least one operating parameter of the rotor.

Example 2 includes the twelve-phase generator of Example 1, wherein the set of winding coils are configured to generate an alternating current (AC) voltage and a direct current (DC) voltage to the stator, wherein the at least one processor is configured to switch the voltage between the AC voltage and the DC voltage based on the at least one operating parameter of the rotor.

Example 3 includes the twelve-phase generator of Example 2, wherein the at least one processor is configured to detect a fault in the twelve-phase generator, wherein upon detecting a fault, the at least one processor is configured to: control the switching configuration of the set of switches to a different switching configuration of the plurality of switching configurations based on the at least one operating parameter of the rotor and the detected fault, and/or switch the voltage between AC voltage and the DC voltage based on the at least one operating parameter of the rotor and the detected fault.

Example 4 includes the twelve-phase generator of any of Examples 1-3, wherein by controlling the switching configuration of the set of switches, the twelve-phase generator is configured to output a voltage in a range of one to twelve phases.

Example 5 includes the twelve-phase generator of Example 4, wherein the range includes a ten-phase voltage output, an eight-phase voltage output, a six-phase voltage output, a five-phase voltage output, a four-phase voltage output, and a three-phase voltage output.

Example 6 includes the twelve-phase generator of any of Examples 1-5, wherein the at least one processor is configured to provide the variable phase output to one or more loads.

Example 7 includes the twelve-phase generator of any of Examples 1-6, wherein the twelve-phase generator is physically coupled to a vehicle.

Example 8 includes the twelve-phase generator of any of Examples 1-7, wherein the at least one operating parameter includes a torque exerted by the rotor.

Example 9 includes a system, comprising: at least one processor, wherein the at least one processor is configured to generate pulse modulated signals; a driver, wherein the driver is configured to receive the pulse modulated signals from the at least one processor; a power configuration circuit comprising a set of switches electrically coupled to the driver, wherein the driver is configured to provide power signals based on the pulse modulated signals that energize the set of switches; a set of winding coils electrically coupled to the set of switches and to a rotor, wherein the rotor is coupled to a stator, wherein the set of winding coils is configured to: receive the power signals based on one of a plurality of switching configurations of the set of switches, generate a voltage that activates the stator, wherein each one of the set of winding coils is configured to provide a respective voltage output that causes the rotor to operate in one of twelve phases, wherein the set of switches is configured to switch between each of the plurality of switching configurations, wherein in each of the plurality of switching configurations, the set of winding coils is configured to provide a variable phase output in one of the twelve phases, wherein the variable phase output includes an even or odd number of phases, wherein the at least one processor is configured to control the switching configuration of the set of switches based on at least one operating parameter of the rotor.

Example 10 includes the system of Example 9, wherein the set of winding coils are configured to generate an alternating current (AC) voltage and a direct current (DC) voltage to the stator, wherein the at least one processor is configured to switch the voltage between the AC voltage and the DC voltage based on the at least one operating parameter of the rotor.

Example 11 includes the system of Example 10, wherein the at least one processor is configured to detect a fault, wherein upon detecting the fault, the at least one processor is configured to: control the switching configuration of the set of switches to a different switching configuration of the plurality of switching configurations based on the at least one operating parameter of the rotor and the detected fault, and/or switch the voltage between AC voltage and the DC voltage based on the at least one operating parameter of the rotor and the detected fault.

Example 12 includes the system of any of Examples 9-11, wherein the at least one operating parameter includes a torque exerted by the rotor.

Example 13 includes the system of Example 12, wherein when the torque exerted by the rotor exceeds a threshold level, the at least one processor is configured to reconfigure the set of switches from a first switching configuration to a second switching configuration, wherein in the second switching configuration, the set of winding coils is configured to provide the variable phase output with fewer number of phases.

Example 14 includes the system of any of Examples 12-13, wherein when the torque exerted by the rotor is below a threshold level, the at least one processor is configured to reconfigure the set of switches from a first switching configuration to a second switching configuration, wherein in the second switching configuration, the set of winding coils is configured to provide the variable phase output with a higher number of phases.

Example 15 includes the system of any of Examples 12-14, wherein by controlling the switching configuration of the set of switches, the at least one processor is configured to output a voltage in a range of one to twelve phases.

Example 16 includes the system of Example 15, wherein the range includes a ten-phase voltage output, an eight-phase voltage output, a six-phase voltage output, a five-phase voltage output, a four-phase voltage output, and a three-phase voltage output.

Example 17 includes a method for operating a reconfigurable generator, wherein the reconfigurable generator is configured to provide a variable phase output in a first phase of a plurality of phases to one or more loads, the method comprising: setting a power reconfiguration circuit of the reconfigurable generator comprising a set of switches in a first switching configuration; determining one or more operating parameters of the reconfigurable generator; determining a need to change the variable phase output based on the one or more operating parameters; setting the power reconfiguration circuit in a second switching configuration in response to determining the need to change the variable phase output; and outputting the variable phase output in a second phase of the plurality of phases.

Example 18 includes the method of Example 17, comprising: determining that a torque exerted by a rotor of the reconfigurable generator exceeds a threshold level; setting the power reconfiguration circuit in the second switching configuration in response to determining that the torque exerted by the rotor exceeds the threshold level, wherein the second phase is less than the first phase.

Example 19 includes the method of any of Examples 17-18, comprising: determining that a torque exerted by a rotor of the reconfigurable generator is below a threshold level; setting the power reconfiguration circuit in the second switching configuration in response to determining that the torque exerted by the rotor is below the threshold level, wherein the second phase is higher than the first phase.

Example 20 includes the method of any of Examples 17-19, comprising: determining a fault in the reconfigurable generator; and setting the power reconfiguration circuit in the second switching configuration in response to determining the fault.

Although specific embodiments have been illustrated and described herein, it will be appreciated by those of ordinary skill in the art that any arrangement, which is calculated to achieve the same purpose, may be substituted for the specific embodiments shown. Therefore, it is manifestly intended that this invention be limited only by the claims and the equivalents thereof.

## Claims

1. A system, comprising:
at least one processor, wherein the at least one processor is configured to generate pulse modulated signals;
a driver, wherein the driver is configured to receive the pulse modulated signals from the at least one processor;
a power configuration circuit comprising a set of switches electrically coupled to the driver, wherein the driver is configured to provide power signals based on the pulse modulated signals that energize the set of switches;
a set of winding coils electrically coupled to the set of switches and to a rotor, wherein the rotor is coupled to a stator, wherein the set of winding coils is configured to:
receive the power signals based on one of a plurality of switching configurations of the set of switches,
generate a voltage that activates the stator, wherein each one of the set of winding coils is configured to provide a respective voltage output that causes the rotor to operate in one of twelve phases,
wherein the set of switches is configured to switch between each of the plurality of switching configurations, wherein in each of the plurality of switching configurations, the set of winding coils is configured to provide a variable phase output in one of the twelve phases, wherein the variable phase output includes an even or odd number of phases,
wherein the at least one processor is configured to control the switching configuration of the set of switches based on at least one operating parameter of the rotor.

2. The system of claim 1, wherein the set of winding coils are configured to generate an alternating current (AC) voltage and a direct current (DC) voltage to the stator, wherein the at least one processor is configured to switch the voltage between the AC voltage and the DC voltage based on the at least one operating parameter of the rotor.

3. The system of claim 2, wherein the at least one processor is configured to detect a fault, wherein upon detecting the fault, the at least one processor is configured to:
control the switching configuration of the set of switches to a different switching configuration of the plurality of switching configurations based on the at least one operating parameter of the rotor and the detected fault, and/or
switch the voltage between AC voltage and the DC voltage based on the at least one operating parameter of the rotor and the detected fault.

4. The system of claim 1, wherein the at least one operating parameter includes a torque exerted by the rotor.

5. The system of claim 4, wherein when the torque exerted by the rotor exceeds a threshold level, the at least one processor is configured to reconfigure the set of switches from a first switching configuration to a second switching configuration, wherein in the second switching configuration, the set of winding coils is configured to provide the variable phase output with fewer number of phases.

6. The system of claim 4, wherein when the torque exerted by the rotor is below a threshold level, the at least one processor is configured to reconfigure the set of switches from a first switching configuration to a second switching configuration, wherein in the second switching configuration, the set of winding coils is configured to provide the variable phase output with a higher number of phases.

7. The system of claim 3, wherein by controlling the switching configuration of the set of switches, the at least one processor is configured to output a voltage in a range of one to twelve phases.

8. A method for operating a reconfigurable generator, wherein the reconfigurable generator is configured to provide a variable phase output in a first phase of a plurality of phases to one or more loads, the method comprising:
setting a power reconfiguration circuit of the reconfigurable generator comprising a set of switches in a first switching configuration;
determining one or more operating parameters of the reconfigurable generator;
determining a need to change the variable phase output based on the one or more operating parameters;
setting the power reconfiguration circuit in a second switching configuration in response to determining the need to change the variable phase output; and
outputting the variable phase output in a second phase of the plurality of phases.

9. The method of claim 8, comprising:
determining that a torque exerted by a rotor of the reconfigurable generator exceeds a threshold level;
setting the power reconfiguration circuit in the second switching configuration in response to determining that the torque exerted by the rotor exceeds the threshold level,
wherein the second phase is less than the first phase.

10. The method of claim 8, comprising:
determining a fault in the reconfigurable generator; and
setting the power reconfiguration circuit in the second switching configuration in response to determining the fault.
